# EUROPÄISCHE PATENTANMELDUNG

(11) **EP 4 287 496 A1**
(43) Veröffentlichungstag der Anmeldung: **06.12.2023**
(21) Anmeldenummer: 22176269.3
(22) Anmeldetag: 31.05.2022
(51) Int. Cl.: H02P 6/20, H02P 6/18, H02P 6/185

(54) **SENSORLOSE BLOCKKOMMUTIERUNG**

(71) Anmelder: Hilti Aktiengesellschaft, 9494 Schaan (LI)
(72) Erfinder: Freischle, Justus, 86899 Landsberg (DE)
(74) Vertreter: Hilti Aktiengesellschaft Corporate Intellectual Property

(57) **Zusammenfassung**

Verfahren zur sensorlosen Blockkommutierung eines bürstenlosen Gleichstrommotors, wobei im Rahmen des Verfahrens ein Stromsensor zum Erfassen eines durch den Gleichstrommotor fließenden Stroms, eine Detektionsschaltung zur Erfassung der Nulldurchgänge der gegenelektromotorischen Kraft und eine Steuereinheit zum Einsatz kommen, wobei die Steuereinheit geeignet ist, auf Basis des erfassten Stroms und/oder den Nulldurchgängen der gegenelektromotorischen Kraft Blockansteuersignale und Positionsdetektionssignale für einen dem Gleichstrommotor zugeordneten Motorinverter bereitzustellen, wobei die Blockansteuersignale zum Generieren einer Antriebskraft dienen, um einen Rotor des Gleichstrommotors drehend anzutreiben, und die Positionsdetektionssignale zum Erfassen einer Rotorposition des Rotors dienen, und wobei der Gleichstrommotor vor dem Erreichen einer Normalbetriebsphase mehrere Rotorpositionssektoren in einer Anlaufphase durchläuft, und die Steuereinheit in der Anlaufphase ausschließlich Positionsdetektionssignale an den Motorinverter ausgibt.

## Beschreibung

### Sensorlose Blockkommutierung

Die vorliegende Erfindung betrifft ein Verfahren zur sensorlosen Blockkommutierung eines bürstenlosen Gleichstrommotors. Im Rahmen des Verfahrens kommt ein Stromsensor zum Erfassen eines durch den Gleichstrommotor fließenden Stroms, eine Detektionsschaltung zur Erfassung der Nulldurchgänge der gegenelektromotorischen Kraft und eine Steuereinheit zum Einsatz, wobei die Steuereinheit geeignet ist, auf Basis des erfassten Stroms und/oder den Nulldurchgängen der gegenelektromotorischen Kraft Blockansteuersignale und Positionsdetektionssignale für einen dem Gleichstrommotor zugeordneten Motorinverter bereitzustellen. Die Blockansteuersignale dienen typischerweise zum Generieren einer Antriebskraft, um einen Rotor des Gleichstrommotors drehend anzutreiben. Die Positionsdetektionssignale dienen typischerweise zum Erfassen einer Rotorposition des Rotors. Im Rahmen des Verfahrens durchläuft der Gleichstrommotor vor dem Erreichen einer Normalbetriebsphase eine Anlaufphase. Es hat sich in der Praxis gezeigt, dass in der Anlaufphase eine Bestimmung eines Nulldurchgangs der gegenelektromotorischen Kraft (BEMF Nulldurchgangserkennung) - als Grundlage für die sensorlose Blockkommutierung - nicht zuverlässig möglich ist.

Vorrichtungen und Verfahren zur sensorlosen Blockkommutierung sind grundsätzlich aus dem Stand der Technik bekannt.

US 9,819,290 B2 beschreibt ein Elektrowerkzeug mit einem Motor und einer Steuereinheit, die für die Ausgabe von Erfassungssignalen und Ansteuersignalen für einen Inverter ausgebildet ist. Die Steuereinheit bestimmt, zur Modensteuerung in einer Anlaufphase des Motors, die Blockansteuersignale basierend auf Positionserfassungsstromanteilen eines Motorstroms.

US 11,171,586 B2 offenbart ein Elektrowerkzeug mit einer Steuereinheit dazu ausgebildet ist, eine falsche Rotordrehrichtung durch Anlegen einer ersten Vielzahl von Spannungsimpulsen an einen aktuellen Motorsektor und einer zweiten Vielzahl von Spannungsimpulsen an einen vorherigen Sektor zu erkennen.

Es ist Aufgabe der vorliegenden Erfindung ein Verfahren zur sensorlosen Blockkommutierung eines Gleichstrommotors anzugeben, dass die Grundlage für ein genaueres Tracking der Rotorposition des Gleichstrommotors schafft.

Die Aufgabe wird dadurch gelöst, dass die Steuereinheit in der Anlaufphase ausschließlich Positionsdetektionssignale ausgibt. Mit anderen Worten wird der Gleichstrommotor in der Anlaufphase lediglich durch Positionsdetektionsströme, die durch die Positionsdetektionssignale ausgelöst werden, gedreht.

Die Erfindung schließt die Erkenntnis ein, dass bei vorbekannten Kommutierungsverfahren ein vom Stromsensor erfasstes Stromsignal in der Anlaufphase sowohl Ansteuerstromanteile als auch Positionserfassungsstromanteile enthält. Dies erlaubt zwar ein hohes Anlaufmoment, verringert aber die Genauigkeit beim Tracking der Rotorposition.

Die Erfindung schließt weiterhin die Erkenntnis ein, dass in der sensorlosen Motorregelung Statorinduktivitätsveränderungen ausgenutzt werden können, um die Rotorposition unterhalb der Grenze, bei welcher ein Tracking basierend auf BEMF basierten Verfahren möglich ist, detektieren und tracken zu können. Dabei können zwei grundlegende physikalische Eigenschaften des Motors ausgenutzt werden, nämlich Sättigungseffekte des Stators und/oder Salienzeffekte. Eine durch diese Eigenschaften beeinflusste Veränderung des durch den Stromsensor erfassten Stromsignals wird vorzugsweise dem erfindungsgemäßen Verfahren zugrunde gelegt.

In einer besonders bevorzugten Ausgestaltung weisen die Positionsdetektionssignale eine Mehrzahl von Hauptpulsen und eine Mehrzahl von Nebenpulsen auf. Es hat sich als vorteilhaft herausgestellt, wenn Hauptpulse und Nebenpulse alternieren. Ein Hauptpuls und ein Nebenpuls können die gleiche Pulsdauer aufweisen. Alternativ können ein Hauptpuls und ein Nebenpuls verschiedene Pulsdauern aufweisen. Es hat sich als vorteilhaft herausgestellt, wenn zwischen dem Übergang von Hauptpuls zu Nebenpuls beziehungsweise von Nebenpuls zu Hauptpuls die gleichen Pausenzeiten vorgesehen werden. Alternativ kann zwischen dem Übergang von Hauptpuls zu Nebenpuls beziehungsweise von Nebenpuls zu Hauptpuls eine jeweils unterschiedliche Pausenzeit vorgesehen werden. Eine alternierende Abfolge von Hauptpulsen und Nebenpulsen ist als Pulssequenz definiert.

In einer besonders bevorzugten Ausgestaltung wird für den Hauptpuls ein dem aktuellen Rotorpositionssektor zugeordneter Ansteuerungszustand verwendet und für den Nebenpuls ein Ansteuerungszustand verwendet, der einem nächsten, dem aktuellen Rotorpositionssektor in Rotordrehrichtung unmittelbar folgenden Rotorpositionssektor zugeordnet ist.

In einer weiteren besonders bevorzugten Ausgestaltung wird ein gültiger Wechsel des Rotorpositionssektors detektiert, wenn der Betrag einer durch den Stromsensor erfassten Hauptpulsstromantwort auf den Hauptpuls größer ist als der Betrag einer durch den Stromsensor erfassten Nebenpulsstromantwort auf den Nebenpuls. Es hat sich als vorteilhaft herausgestellt, wenn die durch den Stromsensor erfasste Hauptpulsstromantwort auf den Hauptpuls beim Vergleich mit der durch den Stromsensor erfassten Nebenpulsstromantwort auf den Nebenpuls eine Kommutierungsstromhysterese aufweist. Erst wenn der Betrag der Hauptpulsstromantwort um die Kommutierungsstromhysterese größer ist als die Nebenpulsstromantwort wird ein gültiger Wechsel des Rotorpositionssektors detektiert. Diese Kommutierungsstromhysterese kann einstellbar sein. In einer besonders bevorzugten Ausgestaltung des Verfahrens ist vorgesehen, dass nach einer Detektion eines gültigen Wechsels des Rotorpositionssektor eine vorzugsweise einstellbare Pausenzeit, in der die Motorphasenströme vollständig abklingen, abgewartet wird. Nach der Pausenzeit wird eine nächste Pulssequenz begonnen.

Es hat sich als vorteilhaft herausgestellt, dass, wenn ein gültiger Wechsel des Rotorpositionssektors detektiert wird, die Ansteuerungszustände des Hauptpulses und des Nebenpulses inkrementiert oder dekrementiert, d.h. auf den jeweils nächsten Rotorpositionssektor umgeschaltet werden. Es hat sich als vorteilhaft herausgestellt, wenn ein Umschalten nur erfolgt, falls eine minimale Anzahl von Hauptpulsen und/oder Nebenpulsen pro Pulssequenz eingeprägt wurden. Alternativ oder zusätzlich kann vorgesehen sein, dass ein Umschalten nur erfolgt, falls eine maximale Anzahl von Pulseinprägungen von Hauptpulsen und/oder Nebenpulsen pro Pulssequenz nicht überschritten wurde. In einer weiteren besonders bevorzugten Ausgestaltung wird die aktuelle Rotordrehzahl selbst jeweils über den Zeitraum der Einprägung einer Pulssequenz ermittelt. Jede Pulssequenz kann für einen Rotorpositionssektor, vorzugsweise 60°, gültig sein. Aus diesen beiden Informationen kann bei Kenntnis der Polpaarzahl des Motors die mechanische Drehzahl eindeutig bestimmt werden.

In einer weiteren besonders bevorzugten Ausgestaltung ist vorgesehen, dass wenn ein gültiger Wechsel des Rotorpositionssektors detektiert wird, einmalig ein Richtungsdetektionspuls als Positionsdetektionssignal ausgegeben wird, wobei für den Richtungsdetektionspuls ein Ansteuerungszustand verwendet wird, der einem dem aktuellen Rotorpositionssektor in Rotordrehrichtung unmittelbar vorausgehenden Rotorpositionssektor zugeordnet ist.

In einer besonders bevorzugten Ausgestaltung erfolgt zu Beginn der Anlaufphase, bei stationärem Rotor, eine initiale Rotorpositionserfassung, die kein resultierendes Rotormoment erzeugt.

Es hat sich als vorteilhaft herausgestellt, wenn die Normalbetriebsphase beginnt, sobald die Rotordrehzahl einen Wert erreicht, der im Intervall von 1000 U/min bis 3000 U/min liegt. In einer besonders bevorzugten Ausgestaltung erfolgt eine Kommutierung des bürstenlosen Gleichstrommotors in der Normalbetriebsphase ausschließlich mittels Blockkommutierung. In einer weiteren besonders bevorzugten Ausgestaltung erfolgt die Kommutierung des Gleichstrommotors in der Normalbetriebsphase auf Basis einer Bestimmung der Nulldurchgänge der gegenelektromotorischen Kraft.

Die Aufgabe wird ebenfalls gelöst durch eine elektrische Handwerkzeugmaschine mit einem bürstenlosen Gleichstrommotor, einem Stromsensor zum Erfassen eines durch den Gleichstrommotor fließenden Stroms, eine Detektionsschaltung zur Erfassung der Nulldurchgänge der gegenelektromotorischen Kraft und einer Steuereinheit. Die Steuereinheit ist ausgebildet, auf Basis des erfassten Stroms und/oder den Nulldurchgängen der gegenelektromotorischen Kraft, Blockansteuersignale und Positionsdetektionssignale für einen dem Gleichstrommotor zugeordneten Motorinverter bereitzustellen, wobei die Blockansteuersignale zum Generieren einer Antriebskraft dienen, um einen Rotor des Gleichstrommotors drehend anzutreiben, und die Positionsdetektionssignale zum Erfassen einer Rotorposition des Rotors dienen. Der Gleichstrommotor ist weiterhin ausgebildet vor dem Erreichen einer Normalbetriebsphase mehrere Rotorpositionssektoren in einer Anlaufphase zu durchlaufen. Erfindungsgemäß ist die Steuereinheit ausgebildet, in der Anlaufphase ausschließlich Positionsdetektionssignale an den Motorinverter auszugeben.

Die elektrische Handwerkzeugmaschine kann durch die mit Bezug auf das Verfahren beschriebenen Merkmale in entsprechender Weise weitergebildet sein. Das erfindungsgemäße Verfahren kann auch in anderen mit einem bürstenlosen Gleichstrommotor ausgestatteten Vorrichtungen verwirklicht sein, wie beispielsweise in einem Staubsauger oder Meißelhammer.

In einer besonders bevorzugten Ausgestaltung ist der bürstenlose Gleichstrommotors 3-phasig ausgebildet und weist im elektrischen Bezugsystem sechs Sektoren mit jeweils 60° auf. Dementsprechend ist Motorinverter zum Kommutieren eines 3-phasigen Gleichstrommotors ausgelegt. Dieser Motorinverter besitzt somit drei Halbbrücken mit jeweils zwei Leistungshalbleitern pro Halbbrücke. Es hat sich als vorteilhaft herausgestellt, wenn der bürstenlose Gleichstrommotor in einer Dreiecksverschaltung angeschlossen ist. Alternativ kann der bürstenlose Gleichstrommotor in einer Sternverschaltung angeschlossen sein.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: ein erstes Ausführungsbeispiel einer erfindungsgemäßen Handwerkzeugmaschine;
- Fig. 2: ein erstes Ausführungsbeispiel eines erfindungsgemäßen Verfahrens;
- Fig. 3: ein zweites Ausführungsbeispiel eines erfindungsgemäßen Verfahrens;
- Fig. 4: eine initiale Rotorpositionserfassung beim Verfahren der Fig. 2; und
- Fig. 5: ein alternatives Verfahren zur initialen Rotorpositionserfassung.

### Ausführungsbeispiele:

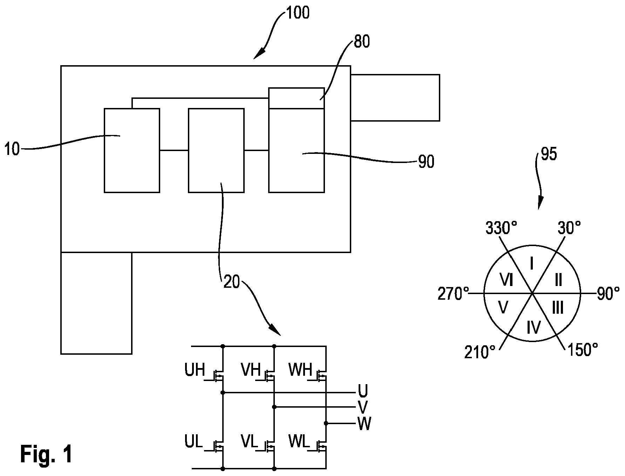

Fig. 1 zeigt - in stark schematisierter Form - eine elektrische Handwerkzeugmaschine 100. Die Handwerkzeugmaschine 100 ist ausgestattet mit einem bürstenlosen Gleichstrommotor 90. Der bürstenlose Gleichstrommotor 90 ist 3-phasig ausgebildet und weist einen Rotor 95 mit sechs Rotorpositionssektoren I, II, III, IV, V, VI mit jeweils 60° auf. Zum Gleichstrommotor 90 zugeordnet ist ein Stromsensor 80 zum Erfassen eines durch den Gleichstrommotor 90 fließenden Stroms. Zusätzlich ist eine Schaltung zur Nulldurchgangserkennung der gegenelektromotorischen Kraft 70 vorgesehen.

Dem Gleichstrommotor 90 ist ein Motorinverter 20 vorgeschaltet, der vorliegend sechs FETs (Feldeffekttransistoren) aufweist, wobei jeweils zwei FETs pro Phase U, V, W vorgesehen sind. Die elektrische Handwerkzeugmaschine 100 verfügt weiterhin über eine Steuereinheit 10, die ausgebildet ist, auf Basis des mittels des Stromsensors 80 erfassten Stroms und/oder den Nulldurchgängen der gegenelektromotorischen Kraft Blockansteuersignale und Positionsdetektionssignale für den Motorinverter 20 bereitzustellen. Die Blockansteuersignale dienen (in aus dem Stand der Technik bekannter Weise) zum Generieren einer Antriebskraft, um den Rotor 95 drehend anzutreiben. Die Positionsdetektionssignale dienen zum Erfassen einer Rotorposition des Rotors 95. Erfindungsgemäß ist die Steuereinheit 10 ausgebildet, in einer Anlaufphase, d.h. beispielhaft bis zu einer Drehzahl des Gleichstrommotor von 2000 U/min ausschließlich Positionsdetektionssignale an den Motorinverter 20 auszugeben, was mit Bezug auf die folgenden Figuren genauer erläutert wird.

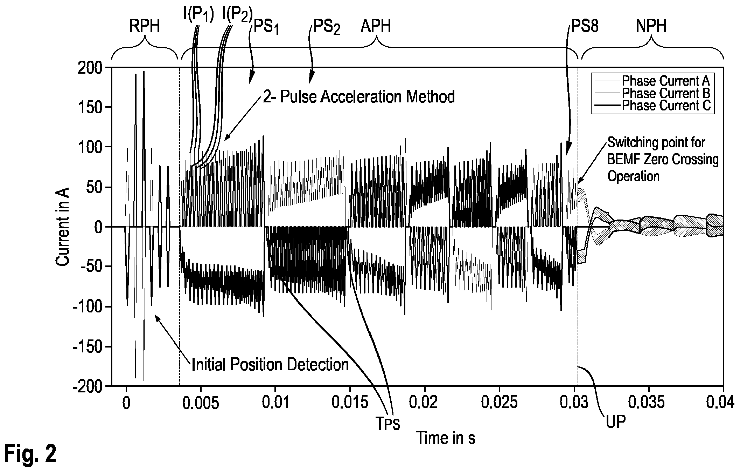

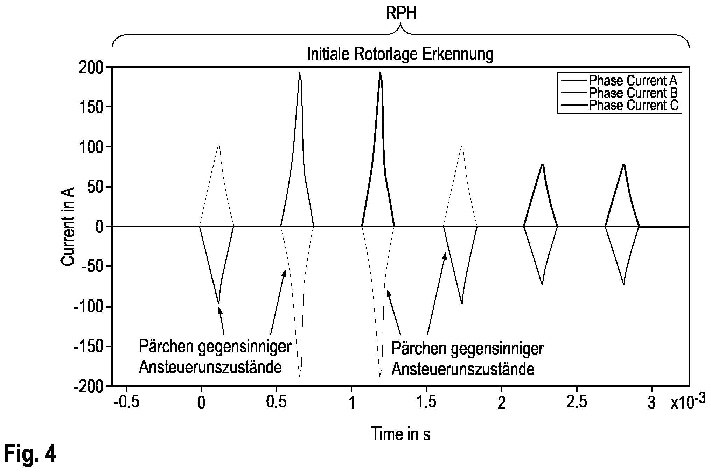

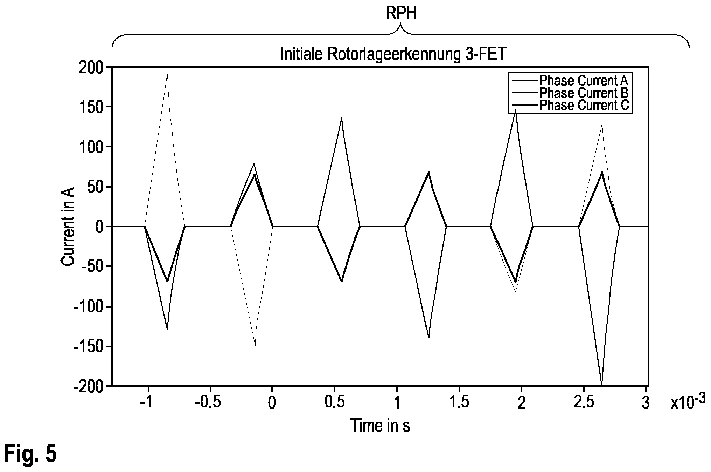

Fig. 2 zeigt ein Diagramm des zeitlichen Verlaufs der mittels dreier Stromsensoren erfassten Phasenströme A, B, C (entsprechend Phase U, V, W in Fig. 1). Das Diagramm teilt sich in eine initiale Positionsdetektion/Ruhephase IPD/RPH, eine Anlaufphase APH und eine Normalbetriebsphase NPH. Während der initialen Positionsdetektion/Ruhephase IPD/RPH befindet sich der Rotor in stationärem Stillstand. Die initiale Rotorpositionserfassung wird später mit Bezug auf die Fig. 4 und 5 genauer erläutert.

In der Anlaufphase APH, die sich unmittelbar an die initiale Positionsdetektion anschließt und beispielhaft bis etwa 30 Millisekunden erstreckt, ist eine Bestimmung eines Nulldurchgangs der gegenelektromotorischen Kraft (BEMF Nulldurchgangserkennung) als Grundlage für die sensorlose Blockkommutierung des Gleichstrommotors 90 nicht zuverlässig möglich. Hier setzt die Erfindung ein, die vorsieht, dass die Steuereinheit in der Anlaufphase APH ausschließlich Positionsdetektionssignale an den Motorinverter ausgibt.

Im Rahmen des Verfahrens werden als Positionsdetektionssignale an den Motorinverter 20 zwei Spannungspulse, nämlich ein Hauptpuls und ein Nebenpuls alternierend eingeprägt und die resultierenden Stromamplituden erfasst und verglichen. Daher kann dieses Verfahren auch als "2-Pulse Acceleration Method" bezeichnet werden. Durch die eingeprägten Hauptpulse und Nebenpulse wird ein resultierendes Drehmoment erzeugt, welches den Rotor in Drehung versetzt.

Dementsprechend zeigt das Diagramm der Fig. 2 die Hauptpulsstromantworten I(P1) alternierend mit den Nebenpulsstromantworten I(P2). Für den Hauptpuls wird ein dem aktuellen Rotorpositionssektor zugeordneter Ansteuerungszustand des Motorinverters verwendet. Für den Nebenpuls wird ein Ansteuerungszustand verwendet, der einem nächsten, dem aktuellen Rotorpositionssektor in Rotordrehrichtung unmittelbar folgenden Rotorpositionssektor zugeordnet ist. Die Hauptpulsstromantworten I(P1) und die Nebenpulsstromantworten I(P2) ändern sich mit der Rotorposition, was auf die eingangs erwähnten Sättigungseffekte bzw. Salienzeffekte zurückzuführen ist.

Besitzt die Hauptpulsstromantwort I(P1) des Hauptpulses eine größere Amplitude als die Nebenpulsstromantwort I(P2) des Nebenpulses, befindet sich der Rotor im nächsten Rotorpositionssektor. Aus Robustheitsgründen wird hier zusätzlich eine einstellbare Kommutierungsstromhysterese IHys verwendet mit dem die Nebenpulsstromantwort I(P2) beaufschlagt wird. Demnach wird ein gültiger Wechsel des Rotorpositionssektors detektiert, wenn die Bedingung Hauptpulsstromantwort I(P1) > Nebenpulsstromantwort I(P2) + Kommutierungsstromhysterese IHys erfüllt ist. Wenn ein solcher gültiger Wechsel des Rotorpositionssektors detektiert wird, werden die Ansteuerungszustände des Hauptpulses und des Nebenpulses inkrementiert oder dekrementiert. Die eine erste Pulssequenz PS₁ ist abgeschlossen. Anschließend wird eine einstellbare Pausenzeit T_{PS} abgewartet. In dieser Pausenzeit T_{PS} müssen die Motorphasenströme vollständig abklingen, wie in Fig. 2 dargestellt ist. Ist die Pausenzeit T_{PS} abgelaufen, wird mit der nächsten Pulssequenz, in diesem Fall der zweiten Pulssequenz PS2 begonnen. In der in Fig. 2 gezeigten Anlaufphase (APH) existieren beispielhaft acht Pulssequenzen. Am Ende der achten Pulssequenz PS8 liegt ein Umschaltzeitpunkt (UP) vor an welchem die Normalbetriebsphase (NPH) des Gleichstrommotors beginnt. Eine Kommutierung des bürstenlosen Gleichstrommotors erfolgt ab diesem Umschaltzeitpunkt (UP) ausschließlich mittels Blockkommutierung. Die Kommutierung des Gleichstrommotors in der Normalbetriebsphase erfolgt auf Basis einer Bestimmung der Nulldurchgänge der gegenelektromotorischen Kraft.

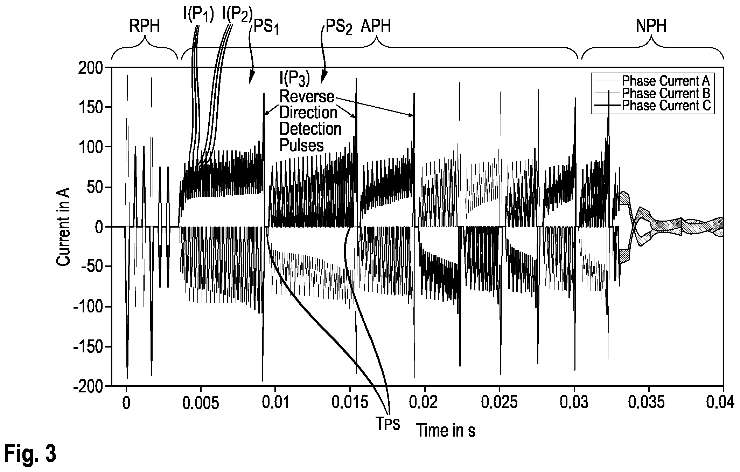

Fig. 3 zeigt die sogenannte "3-Pulse Acceleration Method" bei dem zusätzlich zu dem mit Bezug auf Fig. 2 beschriebenen Verfahren in jeder Pulssequenz (PS) einmalig ein Richtungsdetektionspuls als Positionsdetektionssignal an den Motorinverter ausgegeben wird. Ein solcher Richtungsdetektionspuls bewirkt jeweils eine in Fig. 3 gezeigte Richtungsdetektionspulsstromantwort I(P3). Für den Richtungsdetektionspuls wird jeweils ein Ansteuerungszustand verwendet, der einem dem aktuellen Rotorpositionssektor in Rotordrehrichtung unmittelbar vorausgehenden Rotorpositionssektor zugeordnet ist. Ein Richtungsdetektionspuls wird jeweils eingeprägt, wenn ein gültiger Wechsel des Rotorpositionssektors entsprechend der Beschreibung der Fig. 2 detektiert wird.

Besitzt die Richtungsdetektionspulsstromantwort I(P3) des Richtungsdetektionspulses eine größere Amplitude als die zuletzt gemessene Hauptpulsstromantwort I(P1) des Hauptpulses, dreht sich der Rotor in gewünschter Richtung. Aus Robustheitsgründen wird hier zusätzlich eine einstellbare Richtungsstromhysterese iHysRi verwendet mit dem die Hauptpulsstromantwort I(P1) beaufschlagt wird. Demnach wird eine Drehung des Rotors in die gewünschte Dreht detektiert, wenn die Bedingung Richtungsdetektionspulsstromantwort I(P3) > Hauptpulsstromantwort I(P1) + Richtungsstromhysterese IHysRi erfüllt ist. Andernfalls handelt es sich um eine Drehung des Rotors in die ungewünschte Drehrichtung.

Die mit Bezug auf die Fig. 2 und 3 beschriebenen Verfahren können jeweils durch eine initiale Rotorpositionserfassung ergänzt werden. Dies wird nun mit Bezug auf die Fig. 4 und 5 genauer beschrieben.

Fig. 4 und 5 zeigen jeweils ein Diagramm des zeitlichen Verlaufs der mittels dreier Stromsensoren erfassten Phasenströme A, B, C (entsprechend Phase U, V, W in Fig. 1). Die initiale Rotorpositionserfassung erfolgt in einer Ruhephase RPH, die der Anlaufphase APH (vgl. Fig. 2 und 3) zeitlich vorangestellt ist. In der Ruhephase RPH befindet sich der Rotor im Stillstand.

Eine initiale Rotorpositionserfassung erfolgt vorzugsweise derart, dass jeweils Pärchen aus gegensinnigen Ansteuerungszuständen eingeprägt werden, um im Mittel kein resultierendes Drehmoment zu erzeugen. Nach der Pulseinprägung sind Pausenzeiten vorgesehen, so dass die erzeugten Ströme vollständig abklingen können, bevor der nächste Puls eingeprägt wird.

Bei der initialen Rotorpositionserfassung werden vorzugsweise die gleichen physikalischen Eigenschaften genutzt, die auch in der Anlaufphase APH zum Tragen kommen. Bei der initialen Rotorpositionserfassung werden gleichsam Unterschiede in den Stromantworten der eingeprägten Spannungspulse verwendet, um auf die initiale Rotorposition schließen zu können. Allerdings gibt es bei bestimmten Rotorpositionen, genauer gesagt den Sektorgrenzen der Erfassung, eine Winkelunsicherheit von 60° (ein Rotorpositionssektor). An diesen Positionen kann bereits ein Messrauschen der Strommessung zu einer Fehldetektion der initialen Rotorlage um einen Rotorpositionssektor führen. Es hat sich als vorteilhaft herausgestellt, wenn, um die Häufigkeit einer Fehlbestimmung der initialen Rotorlage zu minimieren, die Rastpositionen des bürstenlosen Gleichstrommotors nicht mit den Erfassungssektorgrenzen des Verfahrens übereinstimmen. Dies lässt sich damit begründen, dass das magnetische System des Gleichstrommotors nach dem geringsten magnetischen Widerstand (Reluktanz) strebt und dies an den magnetischen Rastpositionen des Motors erfüllt ist. Somit stellen die Rastpositionen die häufigsten Rotorpositionen bei der initialen Rotorpositionserfassung dar. Weiterhin werden die Orientierungen der eingeprägten Spannungszeiger durch die Verschaltung (Stern oder Dreieck) des Motors bestimmt. Die Orientierungen der eingeprägten Spannungszeiger unterscheiden sich zwischen einer Sternverschaltung und einer Dreiecksverschaltung um 30°.

Das erfindungsgemäße Verfahren und/oder die erfindungsgemäße Vorrichtung kann je nach elektrischer Verschaltung des bürstenlosen Gleichstrommotors (Stern oder Dreieck) die Verwendung einer 3-FET Blockkommutierung oder 2-FET Blockkommutierung vorsehen. Diese zwei Ansteuerungssysteme unterscheiden sich dahingehend, dass sie unterschiedliche Ansteuerungszustände besitzen und somit um 30° unterschiedliche Spannungspulse einprägen. Dadurch kann der Unterschied der Verschaltung kompensiert werden. Die Erfassungsgrenzen können somit immer von den magnetischen Rastpositionen getrennt werden. Dies bietet den Vorteil, dass der oben beschriebene Detektionsalgortihmus unverändert bleiben kann. Die Erfindung schließt diesbezüglich die Erkenntnis ein, unterschiedliche Ansteuerungszustände zu verwenden, um die Erfassungsgrenzen des Verfahrens von den magnetischen Rastpositionen des Motors in Abhängigkeit der Verschaltung zu trennen.

Fig. 4 zeigt eine initiale Rotorpositionserfassung für einen bürstenlosen Gleichstrommotor in Sternschaltung, der 3-phasig ausgebildet und 6 Sektoren mit jeweils 60° im elektrischen Bezugssystem aufweist. Für diese Motorverschaltung ist es bei der initialen Rotorlageerfassung vorteilhaft, wenn der Motorinverter während eines Positionsdetektionspulses drei aktive Leistungshalbleiter (3-FET) aufweist.

Fig. 5 zeigt eine initiale Rotorpositionserfassung für einen bürstenlosen Gleichstrommotor in Dreieckschaltung, der 3-phasig ausgebildet und 6 Sektoren mit jeweils 60° im elektrischen Bezugssystem aufweist. Für diese Motorverschaltung ist es bei der initialen Rotorlageerfassung vorteilhaft, wenn der Motorinverter während eines Positionsdetektionspulses zwei aktive Leistungshalbleiter (2-FET) aufweist.

### Bezugszeichenliste

- 10: Steuereinheit
- 20: Motorinverter
- 70: BEMF Nulldurchgangsdetektionsschaltung
- 80: Stromsensor
- 90: bürstenloser Gleichstrommotor (BLDC-Motor)
- 95: Rotor
- 100: Elektrische Handwerkzeugmaschine

- I, II ... VI: Rotorpositionssektoren

- IPD: Initiale Rotorpositionsdetektion
- APH: Anlaufphase
- I(P1): Hauptpulsstromantwort
- I(P2): Nebenpulsstromantwort
- I(P3): Richtungsdetektionspulsstromantwort
- IHys: Kommutierungsstromhysterese
- IHysRi: Richtungsstromhysterese
- NPH: Normalbetriebsphase
- RPH: Ruhephase
- PS1, PS2: Pulssequenz
- U, V, W: Phasen des Gleichstrommotors
- UP: Umschaltzeitpunkt

- TP_{S}: Pausenzeit

## Patentansprüche

1. Verfahren zur sensorlosen Blockkommutierung eines bürstenlosen Gleichstrommotors (90), wobei im Rahmen des Verfahrens ein Stromsensor (80) zum Erfassen eines durch den Gleichstrommotor (90) fließenden Stroms, eine Detektionsschaltung (70) zur Erfassung der Nulldurchgänge der gegenelektromotorischen Kraft und eine Steuereinheit (10) zum Einsatz kommen, wobei die Steuereinheit (10) geeignet ist, auf Basis des erfassten Stroms und/oder der Nulldurchgänge der gegenelektromotorischen Kraft Blockansteuersignale und Positionsdetektionssignale für einen dem Gleichstrommotor (90) zugeordneten Motorinverter (20) bereitzustellen, wobei die Blockansteuersignale zum Generieren einer Antriebskraft dienen, um einen Rotor (95) des Gleichstrommotors (90) drehend anzutreiben, und die Positionsdetektionssignale zum Erfassen einer Rotorposition des Rotors (95) dienen, und wobei der Gleichstrommotor (90) vor dem Erreichen einer Normalbetriebsphase (NPH) mehrere Rotorpositionssektoren in einer Anlaufphase (APH) durchläuft,
**dadurch gekennzeichnet, dass** die Steuereinheit (10) in der Anlaufphase (APH) ausschließlich Positionsdetektionssignale an den Motorinverter (20) ausgibt.

2. Verfahren nach Anspruch 1,
**dadurch gekennzeichnet, dass** die Positionsdetektionssignale eine Einzahl oder Mehrzahl von Hauptpulsen und eine Einzahl oder Mehrzahl von Nebenpulsen aufweist.

3. Verfahren nach Anspruch 2,
**dadurch gekennzeichnet, dass** Hauptpulse und Nebenpulse alternieren.

4. Verfahren nach Anspruch 2 oder 3,
**dadurch gekennzeichnet, dass** für den Hauptpuls ein dem aktuellen Rotorpositionssektor zugeordneter Ansteuerungszustand verwendet wird und für den Nebenpuls ein Ansteuerungszustand verwendet wird, der einem nächsten, dem aktuellen Rotorpositionssektor in Rotordrehrichtung unmittelbar folgenden Rotorpositionssektor zugeordnet ist.

5. Verfahren nach einem der Ansprüche 2 bis 4,
**dadurch gekennzeichnet, dass** ein gültiger Wechsel des Rotorpositionssektors detektiert wird, wenn der Betrag einer durch den Stromsensor (80) erfassten Hauptpulsstromantwort I(P1) auf den Hauptpuls größer ist als der Betrag einer durch den Stromsensor (80) erfassten Nebenpulsstromantwort I(P2) auf den Nebenpuls.

6. Verfahren nach Anspruch 5,
**dadurch gekennzeichnet, dass**, wenn ein gültiger Wechsel des Rotorpositionssektors detektiert wird, die Ansteuerungszustände des Hauptpulses und des Nebenpulses inkrementiert oder dekrementiert werden.

7. Verfahren nach Anspruch 5 oder 6,
**dadurch gekennzeichnet, dass**, wenn ein gültiger Wechsel des Rotorpositionssektors detektiert wird, einmalig ein Richtungsdetektionspuls (P3) als Positionsdetektionssignal ausgegeben wird, wobei für den Richtungsdetektionspuls ein Ansteuerungszustand verwendet wird, der einem dem aktuellen Rotorpositionssektor in Rotordrehrichtung unmittelbar vorausgehenden Rotorpositionssektor zugeordnet ist.

8. Verfahren nach wenigstens einem der vorangehenden Ansprüchen,
**dadurch gekennzeichnet, dass** zu Beginn der Anlaufphase (APH), bei stationärem Rotor (95), eine initiale Rotorpositionserfassung (IPD) erfolgt, die kein resultierendes Rotormoment erzeugt.

9. Verfahren nach wenigstens einem der vorangehenden Ansprüche,
**dadurch gekennzeichnet, dass** die Normalbetriebsphase (NPH) beginnt, sobald die Rotordrehzahl einen Wert erreicht, der im Intervall von 1000 U/min bis 3000 U/min liegt.

10. Verfahren nach wenigstens einem der vorangehenden Ansprüche,
**dadurch gekennzeichnet, dass** eine Kommutierung des bürstenlosen Gleichstrommotors (90) in der Normalbetriebsphase (NPH) ausschließlich mittels Blockkommutierung erfolgt.

11. Verfahren nach wenigstens einem der vorangehenden Ansprüche,
**dadurch gekennzeichnet, dass** die Kommutierung des Gleichstrommotors (90) in der Normalbetriebsphase (NPH) auf Basis einer Erfassung der Nulldurchgänge der gegenelektromotorischen Kraft erfolgt.

12. Elektrische Handwerkzeugmaschine (100) mit einem bürstenlosen Gleichstrommotor (90), einem Stromsensor (80) zum Erfassen eines durch den Gleichstrommotor (90) fließenden Stroms eine Detektionsschaltung (70) zur Erfassung der Nulldurchgänge der gegenelektromotorischen Kraft und einer Steuereinheit (10), wobei die Steuereinheit (10) ausgebildet ist, auf Basis des erfassten Stroms und/oder den Nulldurchgängen der gegenelektromotorischen Kraft Blockansteuersignale und Positionsdetektionssignale für einen dem Gleichstrommotor (90) zugeordneten Motorinverter (20) bereitzustellen, wobei die Blockansteuersignale zum Generieren einer Antriebskraft dienen, um einen Rotor (95) des Gleichstrommotors (90) drehend anzutreiben, und die Positionsdetektionssignale zum Erfassen einer Rotorposition des Rotors (95) dienen, und wobei der Gleichstrommotor (90) ausgebildet ist vor dem Erreichen einer Normalbetriebsphase (NPH) mehrere Rotorpositionssektoren (I, II ... VI) in einer Anlaufphase (APH) zu durchlaufen,
**dadurch gekennzeichnet, dass** die Steuereinheit (10) ausgebildet ist in der Anlaufphase (APH) ausschließlich Positionsdetektionssignale an den Motorinverter (20) auszugeben.
